# EUROPÄISCHE PATENTSCHRIFT

(11) **EP 2 217 456 B1**
(45) Veröffentlichungstag und Bekanntmachung des Hinweises auf die Patenterteilung: **13.03.2013**
(21) Anmeldenummer: 08804778.2
(22) Anmeldetag: 26.09.2008
(51) Int. Cl.: B60C 11/16

(54) **FAHRZEUGLUFTREIFEN**
VEHICLE PNEUMATIC TIRE
PNEUMATIQUE DE VÉHICULE

(30) Priorität: 08.11.2007 DE 102007053609
(43) Veröffentlichungstag der Anmeldung: 18.08.2010
(73) Patentinhaber: Continental Reifen Deutschland GmbH, 30165 Hannover (DE)
(72) Erfinder: HEINE, Stefan, 30163 Hannover (DE); SCHLITTENHARD, Jan, 30900 Wedemark (DE)
(74) Vertreter: Finger, Karsten
(86) Internationale Anmeldenummer: PCT/EP2008/062899
(87) Internationale Veröffentlichungsnummer: WO 2009/059849

(56) Entgegenhaltungen:
- EP-A- 1 088 685
- DE-A1- 2 037 330
- DE-A1- 10 258 812

## Beschreibung

Die Erfindung betrifft einen Fahrzeugluftreifen, insbesondere für den Einsatz unter winterlichen Fahrbedingungen mit einem Laufstreifen mit durch Umfangsnuten und Quernuten gebildeten Profilblöcken, welche jeweils mit einer Vielzahl von parallel zueinander verlaufenden Einschnitten versehen sind, die in bzw. im Wesentlichen in Profilquerrichtung orientiert sind, wobei Profilblöcke vorgesehen sind, die miteinander über Brücken verbunden sind und wobei im Laufstreifen an vorbestimmten Positionen Spikes eingesetzt sind.

Es ist üblich, bei Fahrzeugluftreifen zur Verbesserung der Winterfahreigenschaften, insbesondere der Griffeigenschaften auf schneeigem oder eisigem Untergrund, die Anzahl der Einschnitte und die Länge der Profilblockkanten zu erhöhen. Diese Maßnahmen bewirken ein Absinken der Umfangssteifigkeit des Laufstreifens und sind daher nachteilig für die Fahreigenschaften des Reifens auf trockenem Untergrund. Ein gewisser Ausgleich der geringeren Profilumfangssteifigkeit lässt sich durch eine Ausführung der Einschnitte mit Abschnitten, die auf unterschiedliche Tiefen reichen, und durch eine Winkelung der Einschnitte gegenüber der Umfangsrichtung erzielen. Bei Spikereifen werden die Spikes in vorbestimmten Positionen in die Profilblöcke eingebracht. Die Spikelöcher werden durch in der Reifenvulkanisationsform eingesetzte Vorformstifte ausgebildet. Um einen festen Halt der Spikes im Laufstreifen zu gewährleisten, ist es erforderlich, eine gewissen Zone um die Spikelöcher frei von Einschnitten auszuführen. Die dadurch verringerte Einschnittdichte führt zwangsläufig zu einer Verschlechterung der Winterfahreigenschaften.

Aus der EP-A-1 088 685 ist ein Winterreifen, welcher ein Traktionsreifen für Schwerlastfahrzeuge ist, bekannt, dessen Blöcke in benachbarten Blockreihen in Umfangsrichtung gegeneinander versetzt sind. Jeweils zwei Blöcke aus unterschiedlichen und einander benachbarten Blockreihen sind über eine Brücke miteinander verbunden. Über die Brücken verlaufen durchgehend Einschnitte. Die vorgesehenen Spikes sind an vorbestimmten Positionen innerhalb der Blöcke in einschnittfreien Zonen angebracht.

Aus der DE-A-20 37 330 ist ein zur Verwendung im Winter geeigneter Fahrzeugluftreifen bekannt, dessen Laufstreifen ineinander verschachtelte Stollen aufweist, welche in der Umfangsrichtung des Laufstreifens miteinander verbunden sind. Bei einer der offenbarten Ausführungsvarianten setzen sich die schulterseitig verlaufenden Rippen aus äußeren Stollen und zu diesen in axialer Richtung versetzten inneren Stollen zusammen. Sowohl in den äußeren als auch den inneren Stollen sind Spikes angebracht.

Der Erfindung liegt die Aufgabe zu Grunde, bei einem Reifen der eingangs genannten Art eine Verbesserung der Winterfahreigenschaften zu erzielen ohne eine Verschlechterung der Handlingeigenschaften bzw. der Trockenfahreigenschaften des Reifens in Kauf nehmen zu müssen. Insbesondere sollen die Spikes ohne eine Reduktion der Einschnittdichte bzw. Einschnittanzahl positioniert werden können.

Gelöst wird die gestellte Aufgabe erfindungsgemäß dadurch, dass die Brücken Profilblöcke einer Blockreihe miteinander verbinden und innerhalb der axialen Erstreckung der Blockreihe angeordnet sind, wobei die Spikes in den Brücken positioniert sind und wobei zwischen den durch eine Brücke verbundenen Profilblöcken zumindest ein Quernutabschnitt verbleibt.

Die Brücken zwischen den Profilblöcken bewirken eine Erhöhung der Profilumfangssteifigkeit und damit eine Verbesserung der Handlingeigenschaften und der Trockenfahreigenschaften des Reifens. Da die Positionen der Spikes aus den Profilblöcken heraus in die Brücken verlegt sind, brauchen in den Profilblöcken keine einschnittfreien Zonen zur Sicherstellung der Haltekräfte für die Spikes vorgesehen werden. Die mit der üblichen Anordnung von Spikes einhergehende Verschlechterung der Schneegriffeigenschaften ist daher bei erfindungsgemäß ausgeführten Laufstreifen nicht mehr gegeben. Die höhere Umfangssteifigkeit des Laufstreifens kann dazu genützt werden, eine größere Anzahl von Profilblöcken pro Blockreihe und/oder eine größere Einschnittdichte vorzusehen, um derart die Winterfahreigenschaften des Laufstreifens zu verbessern. Dabei kann der Einfluss der Brücken auf die Umfangssteifigkeit von erfindungsgemäß ausgeführten Reifen dafür genützt werden, die Winterfahreigenschaften bzw. Griffeigenschaften mit den Trockenfahreigenschaften auszubalancieren. Eine Anordnung der Brücken in den Schulterblockreihen des Laufstreifens sowie die damit verbundene Möglichkeit, die Anzahl der Blöcke über den Reifenumfang zu erhöhen, ist für das Abrollgeräusch des Reifens vorteilhaft.

Je nach der Anordnung und Lage der Brücken haben diese unterschiedliche Auswirkungen auf die Laufstreifeneigenschaften, beispielsweise die Quersteifigkeit und das Wasserdrainagevermögen. Dabei ist es von Vorteil, für eine möglichst wirkungsvolle Anordnung der Spikes in ein und demselben Laufstreifen die Position der Brücken innerhalb einer Blockreihe zu variieren. So können beispielsweise in einem erfindungsgemäßen Laufstreifen Brücken etwa mittig zwischen Blöcken angeordnet werden, wobei in diesem Fall zu beiden Seiten der Brücken je ein Quernutabschnitt verbleibt. Eine weitere Möglichkeit besteht darin, die Brücken unmittelbar neben einer Umfangsnut vorzusehen. Diese Anordnung ist für das Wasserableitvermögen des Laufstreifens von Vorteil. Bei einer weiteren erfindungsgemäßen Ausführungsvariante werden Brücken nahe oder unmittelbar beim Laufstreifenrand vorgesehen. Dies ermöglicht eine laufstreifenaußenseitige Positionierung der Spikes. Die Quererstreckung der Brücken hat die erforderliche Haltekraft der in ihnen positionierten Spikes zu gewährleisteten. Es ist daher günstig, wenn die Brücken an ihrer Basis eine Quererstreckung von 5 % bis 20 % der Laufstreifenbreite aufweisen.

Die Ausführung der Brückenflanken hat ebenfalls Auswirkungen auf Haltekräfte der Spikes und beeinflusst die zur Verfügung stehende Blockkantenlängen. Die Brücken können nun derart ausgeführt werden, dass zumindest eine der beiden Brückenflanken in radialer Richtung bzw. im Wesentlichen in radialer Richtung verläuft. Besonders vorteilhaft für die seitlichen Haltekräfte der Spikes ist eine Ausführung der Brückenflanken in gestufter Form.

In einem erfindungsgemäß ausgeführten Laufstreifen können auch spikefreie Brücken vorgesehen werden, um die Spikeanzahl nicht unnötig zu erhöhen.

Eine weitere Maßnahme, die Umfangssteifigkeit zu beeinflussen, besteht darin, zwischen einer Brücke und zumindest einem der von dieser verbundenen Blöcke jeweils einen Einschnitt oder eine schmale, bis zu 2 mm breite Rille vorzusehen. Solche Einschnitte können zumindest abschnittsweise bis auf die maximale Profiltiefe reichen, die Tiefe der Rillen sollte 7 mm nicht übersteigen.

In erfindungsgemäß ausgeführten Laufstreifen können ferner einzelne spikefreie Brücken vorgesehen sein. Für eine gleichmäßige Beeinflussung der Umfangssteifigkeit ist es im Allgemeinen vorteilhaft, sämtliche Blöcke innerhalb einer Blockreihe mit Brücken zu verbinden, wobei jedoch nicht sämtliche Brücken spikebesetzt sein müssen.

Erfindungsgemäß ausgeführte Reifen können Laufstreifen aufweisen, bei denen lediglich zumindest eine der Schulterblockreihen mit spikebesetzten Brücken versehen ist. Eine schulternahe Anordnung der Spikes im Laufstreifen hat vor Allem Vorteile beim Bremsen und ist straßenschonender als eine Anordnung im Bereich der Laufstreifenmitte.

Eine Konzentration der Spikeanordnung im mittleren Bereich des Laufstreifens, indem lediglich zumindest eine mittlere im Bereich des Laufstreifens verlaufende Blockreihe mit spikebesetzten Brücken versehen ist, ist von besonderem Vorteil für die Traktionseigenschaften des Reifens.

Weitere Merkmale, Vorteile und Einzelheiten der Erfindung werden nun anhand der Zeichnung, die mehrere Ausführungsbeispiele darstellt, näher beschrieben. Dabei zeigen
Fig. 1 eine Draufsicht auf einen Abschnitt einer Abwicklung eines erfindungsgemäß ausgeführten Laufstreifens,
Fig. 1a, Fig. 2a und Fig. 3a Schnitte entlang der Schnittlinie A-A der Fig. 1, der Schnittlinie B-B der Fig. 2 und der Schnittlinie C-C der Fig. 3 und
Fig. 2 bis Fig. 7 Draufsichten auf Ausschnitte von Laufstreifen mit unterschiedlichen Ausführungsvarianten der Erfindung.

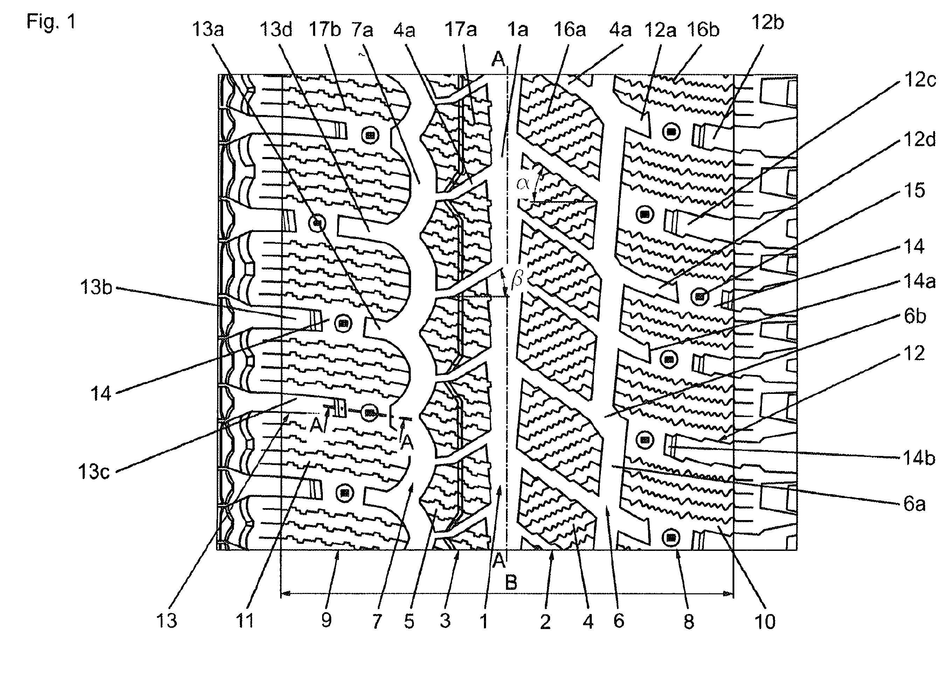

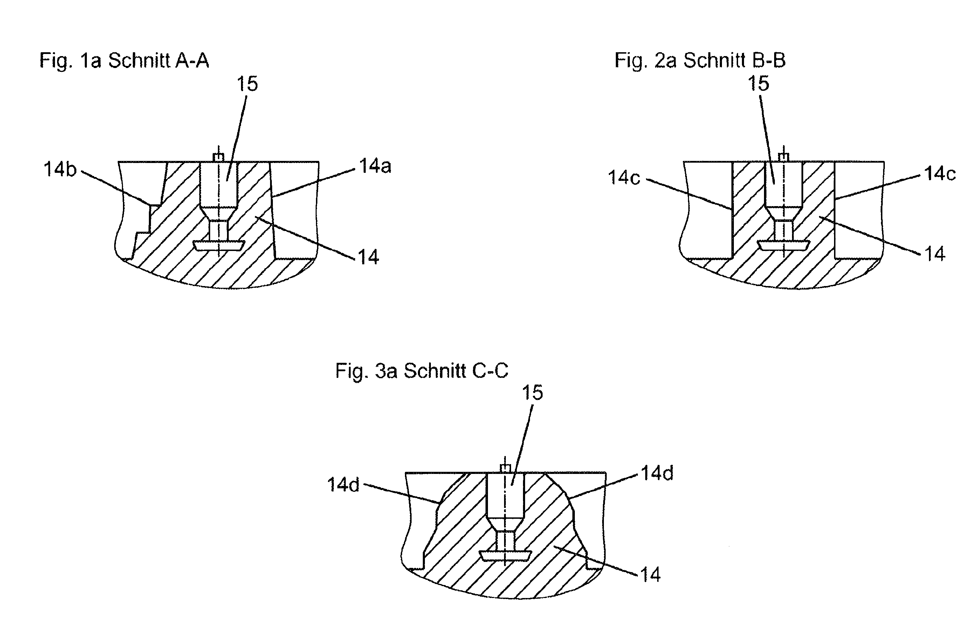

In Fig. 1 ist mit A-A der Reifenäquator und mit B die Breite des bodenberührenden Teils des Laufstreifens bezeichnet. Der dargestellte Laufstreifen weist eine entlang des Reifensäquators A-A verlaufende zentrale Umfangsnut 1 auf, an welche in jeder Laufstreifenhälfte eine aus Blöcken 4, 5 bestehende Blockreihe 2, 3 anschließt, welche jeweils durch eine weitere, sich in Umfangsrichtung erstreckende breite Umfangsnut 6, 7 von je einer Schulterblöcke 10, 11 aufweisenden Schulterblockreihe 8, 9 getrennt ist. Die Ausgestaltung der zentralen Umfangsnut 1 aus relativ kurzen, in Umfangsrichtung jeweils breiter werdenden Abschnitten 1a, der Umfangsnut 6 in einer Zickzackvariante mit abwechselnd längeren und kürzeren Abschnitten 6a, 6b und der Umfangsnut 7 aus aneinandergereihten bogenförmigen Abschnitten 7a ist nicht Gegenstand dieser Erfindung. Die Umfangsnuten 1, 6 und 7 begrenzen die Blöcke 4, 5 in den Blockreihen 2, 3 und die Blöcke 10, 11 in den Schulterblockreihen 8, 9 und prägen daher deren spezielle Formen mit. Die Blöcke 4, 5 in den Blockreihen 2, 3 sind voneinander in Umfangsrichtung durch Quernuten 12, 13 getrennt, welche unter etwa gleich großen Winkeln α, β in der Größenordung von 25° bis 35° zum Reifenäquator A-A verlaufen und bezüglich des Reifenäquators A-A gegensinnig geneigt sind.

Jeder Block 4, 5 und 10, 11 wird von einer Vielzahl von zueinander parallel verlaufenden Einschnitten 16a, 16b, 17a, 17b durchquert. Die Einschnitte 16a, 16b, 17a, 17b weisen eine Breite zwischen 0,4 mm und 0,6 mm auf und können zumindest abschnittsweise bis auf die maximale Profiltiefe reichen. In der in Fig. 1 rechten Laufstreifenhälfte verlaufen die Einschnitte 16a, 16b in Draufsicht wellen- bzw. zickzackförmig. Die Einschnitte 17a, 17b in der anderen Laufstreifenhälfte sind in Draufsicht treppenförmig ausgeführt. Die Einschnitte 16b, 17b in den Blöcken 10, 11 der Schulterblockreihen 8, 9 verlaufen parallel zu den Quernuten 12, 13, die Einschnitte 16a, 17a in den Blöcken 4, 5 der Blockreihen 2, 3 im Wesentlichen in Profilquerrichtung, jedoch nicht parallel zu den Quernuten 4a, 5a.

Die zwischen den Schulterblöcken 10, 11 in den Schulterblockreihen 8, 9 verlaufenden Quernuten 12, 13 stellen keine durchgehende Verbindung zwischen den Umfangsnuten 6, 7 und dem jeweiligen Laufstreifenrand her, sie sind durch Brücken 14 unterbrochen, welche die in Umfangsrichtung benachbarten Blöcke 10, 11 miteinander verbinden. Die Brücken 14 weisen an ihrer Basis eine Quererstreckung bzw. eine Querdimension in der Größenordung von 5 % bis 20% der Laufstreifenbreite B auf, bei der dargestellten Ausführungsvariante entspricht die Quererstreckung der Brücken 14 etwa einem Drittel der Quererstreckung der Schulterblöcke 10, 11 innerhalb der Breite B. Die Außenfläche der Brücken 14 fluchten mit den Außenflächen der Blöcke 10, 11. In der Mitte von vorzugsweise jeder Brücke 14 ist ein insbesondere herkömmlich ausgeführter Spike 15 auf übliche Weise positioniert bzw. verankert. Die Spikes 15 sind daher aus ihrer ansonsten üblichen Position innerhalb der Blöcke 10, 11 heraus versetzt.

Bei dem in Fig. 1 gezeigten Laufstreifen variiert die Position der Brücken 14 in den Schulterblockreihen 8, 9 gegenüber der Querrichtung des Laufstreifens. Gezeigt sind drei unterschiedliche Positionen, wobei in der einen Position die Brücken 14 die beiden in Umfangsrichtung benachbarten Blöcke 10, 11 etwa mittig verbinden, sodass beidseitig der Brücken 14 Quernutabschnitte 12a, 12b bzw. 13a, 13b verbleiben. Bei einer weiteren Position schließen die Brücken 14 unmittelbar bzw. im Wesentlichen unmittelbar an die Umfangsnuten 6, 7 an, sodass an die jeweilige Brücke 14 laufstreifenaußenseitig ein Quernutabschnitt 12c, 13c anschließt, der bis über den Laufstreifenrand hinaus verläuft. Bei der dritten gezeigten Position sind die Brücken 14 nahe den Laufstreifenrändern bzw. an die anschließen vorgesehen, sodass innerhalb der Laufstreifenbreite B-B zwischen den Schulterblöcken 10, 11 Quernutabschnitte 12d, 13d gebildet wird, die in die Umfangsnuten 6, 7 einmünden. Wie Fig. 1 in Verbindung mit Fig. 1a zu entnehmen ist, weisen die Brücken 14 unterschiedlich verlaufende Blockflanken 14a, 14b auf, wobei die zur Laufstreifenmitte weisende Brückenflanke 14a unter einem kleinen Winkel von bis zu 20°, insbesondere bis zu 10°, zur radialen Richtung bzw. im Wesentlichen in radialer Richtung verläuft und die zweite, dem jeweiligen Laufstreifenrand zugewandte Brückenflanke 14b gestuft - insbesondere unter Ausbildung von zwei Stufen - ausgeführt ist.

Die Brücken 14 stellen eine kraftschlüssige Verbindung zwischen den Blöcken 10, 11 her und bewirken daher eine Erhöhung der Umfangssteifigkeit des Laufstreifens. Werden keine weiteren zusätzliche Maßnahmen zur Beeinflussung der Umfangssteifigkeit getroffen, bewirkt die erhöhte Umfangssteifigkeit hauptsächlich eine Verbesserung der Handlingeigenschaften des Reifens. Eine Erhöhung der Anzahl der Einschnitte 16b, 17b in den Blöcken 10, 11 reduziert die Umfangssteifigkeit und bewirkt eine Verbesserung der Winterfahreigenschaften, insbesondere der Griffeigenschaften des Reifens auf schneeigem oder eisigem Untergrund. Die Einschnittdichte kann auf die durch die Brücken 14 bewirkte Erhöhung der Umfangssteifigkeit derart abgestimmt werden, dass sowohl die Winterfahreigenschaften als auch die Fahreigenschaften des Reifens aus trockenen Fahrbahnen gleichermaßen verbessert sind.

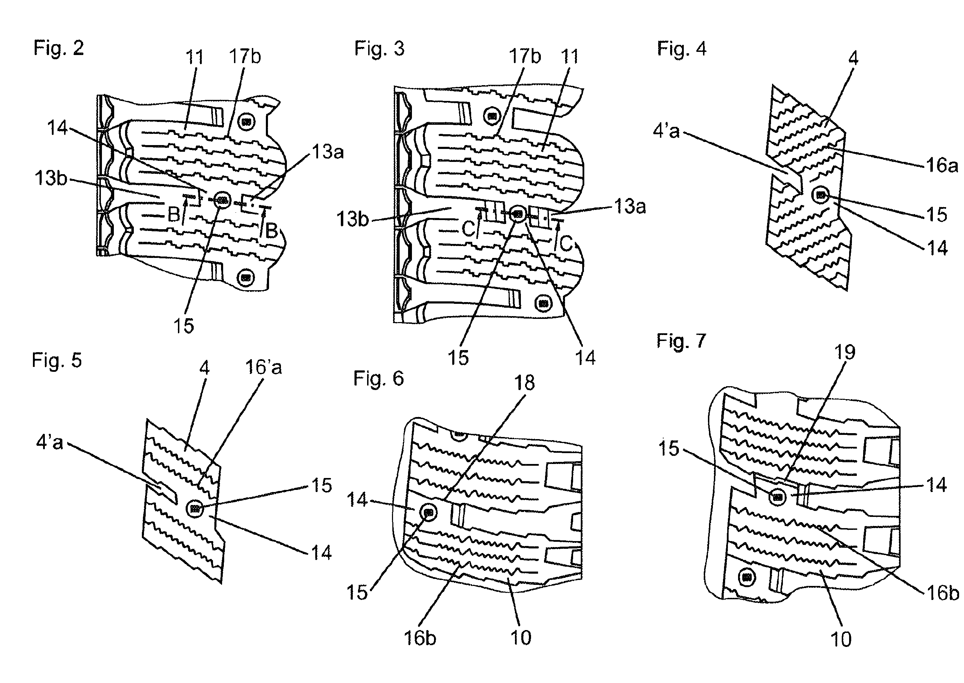

Fig. 2 bis Fig. 7 zeigen weitere Ausführungsvarianten der Erfindung anhand von jeweils zwei in Umfangsrichtung benachbarten Blöcken einer Blockreihe.

Fig. 2 zeigt zwei Schulterblöcke 11, welche durch eine mittig verlaufende und einen Spike 15 tragende Brücke 14 miteinander verbunden sind, deren Brückenflanken 14c, wie es im Schnitt in Fig. 2a gezeigt ist, im Wesentlichen in radialer Richtung bzw. unter einem kleinen spitzen Winkel von einigen Grad zur radialen Richtung verlaufen.

Bei der in Fig. 3 gezeigten Ausführungsform ist die zwei Schulterblöcke 11 verbindende, einen Spike 15 tragende Brücke 14 ebenfalls mittig zwischen den Blöcken 11 angeordnet und besitzt beidseitig Blockflanken 14d, die mehrfach gestuft ausgeführt sind, wie es in Fig. 3a im Schnitt gezeigt ist.

Fig. 4 zeigt eine Ausführungsvariante mit einer Brücke 14 zwischen zwei Blöcken 4 der mittleren Blockreihe 2. Die Brücke 14 schließt unmittelbar an die laufstreifenaußenseitig verlaufende Umfangsnut 6 an, sodass von der Quernut 4a ein Quernutabschnitt 4'a verbleibt, welcher in die zentrale Umfangsnut 1 mündet. Beide Brückenflanken verlaufen analog zu Fig. 2a im Wesentlichen in radialer Richtung. Der mittig angeordnete Spike 15 erfordert eine geringe Kürzung einiger in den Blöcken 4 verlaufenden Einschnitte 16a.

Eine zu Fig. 4 analoge Anordnung einer Brücke 14 zwischen Blöcken 4 zeigt Fig. 5. Die Einschnitte 16'a in den Blöcken 4 sind jedoch parallel zu den Quernutabschnitten 4'a ausgerichtet.

Fig. 6 zeigt eine Ausführungsform einer Brücke 14 zwischen zwei Schulterblöcken 10. Die Brücke 14 schließt unmittelbar an die Umfangsnut 6 an, wobei ihre dem Laufstreifenrand zugewandte Brückenflanke zweifach gestuft ausgeführt ist, analog zu dem in Fig. 2a gezeigten Schnitt. Zwischen der Brücke 14 und zumindest dem einen der Schulterblöcke 10 ist ein gesonderter Einschnitt 18 vorgesehen, welcher eine Breite zwischen 0,4 mm und 0,6 mm aufweist und parallel zu den Einschnitten 16b verläuft. Der Einschnitt 18 kann, vorzugsweise abschnittsweise, bis auf die maximale Profiltiefe reichen. Die Brücke 14 ist jedoch nach wie vor an diesem Block 10 angebunden.

Fig. 7 zeigt eine mittig zwischen zwei Blöcken 10 der Schulterblockreihe 8 verlaufende Brücke 14 mit einer im Wesentlichen radial verlaufenden Brückenflanke und einer doppelt gestuft ausgeführten Brückenflanke, analog zum Schnitt gemäß Fig. 2a. Zumindest zwischen dem einen Block 10 und der Brücke 14 befindet sich eine 0,8 mm bis 1 mm breite Rille 19, die bis auf eine maximale Tiefe von 7 mm reicht.

Es ist möglich, in Blockreihen jeweils zwei Blöcke paarweise durch Brücken 14 miteinander zu verbinden und zwischen den Blockpaaren durchgehende Quernuten zu belassen. Es können jedoch auch zwischen sämtlichen Blöcken einer Blockreihe Brücken 14 vorgesehen sein.

In einem erfindungsgemäß ausgeführten Laufstreifen müssen nicht sämtliche Brücken durch Spikes 15 besetzt werden. Unbesetzte, freie Brücken können, beispielsweise mittig, und parallel zur Erstreckung der Quernutabschnitte mit einem schmalen Einschnitt versehen werden.

Darüber hinaus sind Kombinationen der einzelnen dargestellten und beschriebenen Ausführungsformen bei ein und demselben Laufstreifen möglich. Der Laufstreifen selbst kann eine beliebige Profilierung aufweisen und auch als asymmetrischer Laufstreifen mit definierten Außen- und Innenschultern und/oder als laufrichtungsgebundener Laufstreifen ausgeführt sein. Erfindungsgemäß ausgeführte Reifen sind insbesondere Reifen für PKW, Vans oder SUVs.

### Bezugszeichenliste

- A-A....: Reifenäquator
- B ........: Breite
- 1.........: zentrale Umfangsnut
- 1 a.......: Abschnitte
- 2 .........: Blockreihe
- 3.........: Blockreihe
- 4.........: Block
- 4a .......: Quernuten
- 4'a......: Quernutabschnitte
- 4b.......: Quernuten
- 5.........: Block
- 6.........: Umfangsnut
- 6a .......: Abschnitte
- 6b .......: Abschnitte
- 7.........: Umfangsnut
- 7a .......: Abschnitte
- 8.........: Schulterblockreihe
- 9.........: Schulterblockreihe
- 10.......: Blöcke
- 11.......: Blöcke
- 12 .......: Quernuten
- 12a .....: Quernutabschnitte
- 12b .....: Quernutabschnitte
- 12e .....: Quernutabschnitte
- 12d .....: Quernutabschnitte
- 13 .......: Quernuten
- 13a .....: Quernutabschnitte
- 13b .....: Quernutabschnitte
- 13c .....: Quernutabschnitte
- 13d .....: Quernutabschnitte
- 14 .......: Brücken
- 14a .....: Brückenflanke
- 14b .....: Brückenflanke
- 14c .....: Brückenflanken
- 14d .....: Brückenflanken
- 15 .......: Spikes
- 16a .....: Einschnitte
- 16'a ....: Einschnitte
- 16b .....: Einschnitte
- 17a .....: Einschnitte
- 17b .....: Einschnitte
- 18 .......: Einschnitt
- 19.......: Rille, schmal
- α.........: Winkel
- β .........: Winkel

## Patentansprüche

1. Fahrzeugluftreifen, insbesondere für den Einsatz unter winterlichen Fahrbedingungen mit einem Laufstreifen, mit durch Umfangsnuten (1, 6, 7) und Quernuten (4a, 4b, 12, 13) gebildeten Profilblöcken (4, 5, 10, 11), welche jeweils mit einer Vielzahl von parallel zueinander verlaufenden Einschnitten (16a, 16b, 17a, 17b, 18) versehen sind, die in bzw. im Wesentlichen in Profilquerrichtung orientiert sind, wobei Profilblöcke (4, 5, 10, 11) vorgesehen sind, die miteinander über Brücken (14) verbunden sind und wobei im Laufstreifen an vorbestimmten Positionen Spikes (15) eingesetzt sind,
**dadurch gekennzeichnet,**
**dass** die Brücken (14) Profilblöcke (4, 5, 10, 11) einer Blockreihe (2, 3, 8, 9) miteinander verbinden und innerhalb der axialen Erstreckung der Blockreihe (2, 3, 8, 9) angeordnet sind, wobei die Spikes (15) in den Brücken (14) positioniert sind und wobei zwischen den durch eine Brücke (14) verbundenen Profilblöcken (2, 3, 8, 9) zumindest ein Quernutabschnitt (4'a, 12a, 12b, 12c, 12d; 13a, 13b, 13c, 13d) verbleibt.

2. Fahrzeugluftreifen nach Anspruch 1, **dadurch gekennzeichnet, dass** Brücken (14) etwa mittig zwischen den Blöcken (10, 11) angeordnet sind, wobei zu beiden Seiten der Brücken (14) je ein Quernutabschnitt (12a, 12b, 13a, 13b) verläuft.

3. Fahrzeugluftreifen nach Anspruch 1, **dadurch gekennzeichnet, dass** Brücken (14) unmittelbar neben einer Umfangsnut (6, 7) vorgesehen sind.

4. Fahrzeugluftreifen nach Anspruch 1, **dadurch gekennzeichnet, dass** Brücken (14) nahe oder unmittelbar beim Laufstreifenrand vorgesehen sind.

5. Fahrzeugluftreifen nach einem der Ansprüche 1 bis 4, **dadurch gekennzeichnet, dass** die Brücken (14) an ihrer Basis eine Quererstreckung von 5 % bis 20 % der Laufstreifenbreite (B) aufweisen.

6. Fahrzeugluftreifen nach einem der Ansprüche 1 bis 5, **dadurch gekennzeichnet, dass** die Brücken (14) zumindest eine in radialer Richtung bzw. im Wesentlichen in radialer Richtung verlaufende Brückenflanke (14a, 14c) aufweisen.

7. Fahrzeugluftreifen nach einem der Ansprüche 1 bis 5, **dadurch gekennzeichnet, dass** die Brücken (14) zumindest eine gestuft ausgeführte Brückenflanke (14c, 14d) aufweisen.

8. Fahrzeugluftreifen nach einem der Ansprüche 1 bis 7, **dadurch gekennzeichnet, dass** spikefreie Brücken (14) vorgesehen sind.

9. Fahrzeugluftreifen nach einem der Ansprüche 1 bis 8, **dadurch gekennzeichnet, dass** zwischen Brücken (14) und zumindest einem der von diesen verbundenen Blöcken (10) ein Einschnitt (18) verläuft.

10. Fahrzeugluftreifen nach einem der Ansprüche 1 bis 8, **dadurch gekennzeichnet, dass** zwischen Brücken (14) und zumindest einem der von diesen verbundenen Blöcken (10) eine schmale, bis zu 2 mm breite Rille (19) verläuft.

11. Fahrzeugluftreifen nach Anspruch 10, **dadurch gekennzeichnet, dass** die Rille (19) eine Tiefe von bis zu 7 mm aufweist.

12. Fahrzeugluftreifen nach einem der Ansprüche 1 bis 11 **dadurch gekennzeichnet, dass** einzelne Brücken (14) spikefreie Brücken sind.

13. Fahrzeugluftreifen nach einem der Ansprüche 1 bis 12, **dadurch gekennzeichnet, dass** lediglich zumindest eine der Schulterblockreihen (8, 9) mit spikebesetzten Brücken (14) versehen ist.

14. Fahrzeugluftreifen nach einem der Ansprüche 1 bis 12, **dadurch gekennzeichnet, dass** lediglich zumindest eine im mittleren Bereich des Laufstreifens verlaufende Blockreihe mit spikebesetzten Brücken (14) versehen ist.

## Claims

1. Pneumatic vehicle tyre, in particular for use in winter driving conditions, with a tread rubber, with profile blocks (4, 5, 10, 11), which are formed by circumferential grooves (1, 6, 7) and transverse grooves (4a, 4b, 12, 13) and are respectively provided with a multiplicity of sipes (16a, 16b, 17a, 17b, 18) running parallel to one another, which are oriented in or substantially in the transverse direction of the profile, profile blocks (4, 5, 10, 11) being provided and connected to one another by way of bridges (14), and spikes (15) being inserted in the tread strip at predetermined positions, **characterized in that** the bridges (14) connect profile blocks (4, 5, 10, 11) of a row of blocks (2, 3, 8, 9) to one another and are arranged within the axial extent of the row of blocks (2, 3, 8, 9), the spikes (15) being positioned in the bridges (14) and at least one transverse groove portion (4'a, 12a, 12b, 12c, 12d; 13a, 13b, 13c, 13d) remaining between the profile blocks (2, 3, 8, 9) that are connected by a bridge (14).

2. Pneumatic vehicle tyre according to Claim 1, **characterized in that** bridges (14) are arranged approximately centrally between the blocks (10, 11), a transverse groove portion (12a, 12b, 13a, 13b) running on each of both sides of the bridges (14).

3. Pneumatic vehicle tyre according to Claim 1, **characterized in that** bridges (14) are provided directly alongside a circumferential groove (6, 7).

4. Pneumatic vehicle tyre according to Claim 1, **characterized in that** bridges (14) are provided near or right at the edge of the tread rubber.

5. Pneumatic vehicle tyre according to one of Claims 1 to 4, **characterized in that** the bridges (14) have at their base a transverse extent of 5% to 20% of the width (B) of the tread rubber.

6. Pneumatic vehicle tyre according to one of Claims 1 to 5, **characterized in that** the bridges (14) have at least one bridge flank (14a, 14c) running in the radial direction or substantially in the radial direction.

7. Pneumatic vehicle tyre according to one of Claims 1 to 5, **characterized in that** the bridges (14) have at least one stepped bridge flank (14c, 14d).

8. Pneumatic vehicle tyre according to one of Claims 1 to 7, **characterized in that** spike-free bridges (14) are provided.

9. Pneumatic vehicle tyre according to one of Claims 1 to 8, **characterized in that** a sipe (18) runs between bridges (14) and at least one of the blocks (10) that are connected by them.

10. Pneumatic vehicle tyre according to one of Claims 1 to 8, **characterized in that** a narrow channel (19), up to 2 mm wide, runs between bridges (14) and at least one of the blocks (10) that are connected by them.

11. Pneumatic vehicle tyre according to Claim 10, **characterized in that** the channel (19) has a depth of up to 7 mm.

12. Pneumatic vehicle tyre according to one of Claims 1 to 11, **characterized in that** individual bridges (14) are spike-free bridges.

13. Pneumatic vehicle tyre according to one of Claims 1 to 12, **characterized in that** only at least one of the rows of shoulder blocks (8, 9) is provided with spiked bridges (14).

14. Pneumatic vehicle tyre according to one of Claims 1 to 12, **characterized in that** only at least one row of blocks running in the central region of the tread rubber is provided with spiked bridges (14).

## Revendications

1. Bandage pneumatique pour roue de véhicule, en particulier destiné à être utilisé dans des conditions hivernales de roulage et présentant une bande de roulement dotée de blocs profilés (4, 5, 10, 11) formés par des rainures périphériques (1, 6, 7) et des rainures transversales (4a, 4b, 12, 13) et tous dotés de plusieurs entailles (16a, 16b, 17a, 17b, 18) qui s'étendent parallèlement les unes aux autres et qui sont orientées essentiellement dans la direction transversale du profil,
les blocs profilés (4, 5, 10, 11) étant reliés les uns aux autres par des ponts (14) et des pointes (15) étant utilisées en des positions prédéterminées de la bande de roulement,
**caractérisé en ce que**
les ponts (14) relient les uns aux autres les blocs profilés (4, 5, 10, 11) d'une rangée (2, 3, 8, 9) de blocs et sont disposés dans l'extension axiale de la rangée (2, 3, 8, 9) de blocs,
**en ce que** les pointes (15) sont disposées dans les ponts (14) et
**en ce qu'**au moins une partie (4'a, 12a, 12b, 12c, 12d; 13a, 13b, 13c, 13d) des rainures transversales est conservée entre les blocs profilés (2, 3, 8, 9) reliés par un pont (14).

2. Bandage pneumatique pour roue de véhicule selon la revendication 1, **caractérisé en ce que** des ponts (14) sont disposés sensiblement au milieu entre les blocs (10, 11), une partie (12a, 12b, 13a, 13b) des rainures transversales s'étendant des deux côtés des ponts (14).

3. Bandage pneumatique pour roue de véhicule selon la revendication 1, **caractérisé en ce que** des ponts (14) sont prévus directement à côté d'une rainure périphérique (6, 7).

4. Bandage pneumatique pour roue de véhicule selon la revendication 1, **caractérisé en ce que** des ponts (14) sont prévus à proximité du bord de la bande de roulement ou directement sur ce dernier.

5. Bandage pneumatique pour roue de véhicule selon l'une des revendications 1 à 4, **caractérisé en ce que** les ponts (14) présentent à leur base une extension transversale qui représente de 5 % à 20 % de la largeur (B) de la bande de roulement.

6. Bandage pneumatique pour roue de véhicule selon l'une des revendications 1 à 5, **caractérisé en ce que** les ponts (14) présentent au moins un flanc (14a, 14c) de pont qui s'étend dans la direction radiale ou essentiellement dans la direction radiale.

7. Bandage pneumatique pour roue de véhicule selon l'une des revendications 1 à 5, **caractérisé en ce que** les ponts (14) présentent au moins un flanc (14c, 14d) de pont en gradins.

8. Bandage pneumatique pour roue de véhicule selon l'une des revendications 1 à 7, **caractérisé en ce qu'**il présente des ponts (14) sans pointe.

9. Bandage pneumatique pour roue de véhicule selon l'une des revendications 1 à 8, **caractérisé en ce qu'**une entaille (18) s'étend entre les ponts (14) et au moins l'un des blocs (10) reliés par ces derniers.

10. Bandage pneumatique pour roue de véhicule selon l'une des revendications 1 à 8, **caractérisé en ce qu'**une étroite rainure (19), d'une largeur pouvant atteindre 2 mm, s'étend entre les ponts (14) et au moins l'un des blocs (10) reliés par ces derniers.

11. Bandage pneumatique pour roue de véhicule selon la revendication 10, **caractérisé en ce que** la rainure (19) présente une profondeur pouvant atteindre 7 mm.

12. Bandage pneumatique pour roue de véhicule selon l'une des revendications 1 à 11, **caractérisé en ce que** certains ponts (14) sont des ponts sans pointe.

13. Bandage pneumatique pour roue de véhicule selon l'une des revendications 1 à 12, **caractérisé en ce que** seule au moins une des rangées (8, 9) de blocs d'épaulement est dotée de ponts (14) équipés d'une pointe.

14. Bandage pneumatique pour roue de véhicule selon l'une des revendications 1 à 12, **caractérisé en ce que** seule au moins une rangée de blocs qui s'étend dans la partie centrale de la bande de roulement est dotée de ponts (14) munis d'une pointe.
